# EUROPÄISCHE PATENTSCHRIFT

(11) **EP 2 931 492 B1**
(45) Veröffentlichungstag und Bekanntmachung des Hinweises auf die Patenterteilung: **29.06.2016**
(21) Anmeldenummer: 13810906.1
(22) Anmeldetag: 29.11.2013
(51) Int. Cl.: B29C 49/04, B29C 49/42, B29C 49/78, B29C 47/54, B29C 47/00, B29C 47/92, B29K 105/00, B29L 31/00, B29K 101/12

(54) **EXTRUSIONSBLASFORMVERFAHREN UND VORRICHTUNG ZU DESSEN DURCHFÜHRUNG**
EXTRUSION BLOW MOLDING METHOD AND DEVICE FOR THE PERFORMANCE THEREOF
PROCÉDÉ D'EXTRUSION-SOUFFLAGE ET DISPOSITIF POUR LA MISE EN OEUVRE DUDIT PROCÉDÉ

(30) Priorität: 11.12.2012 DE 102012112110
(43) Veröffentlichungstag der Anmeldung: 21.10.2015
(73) Patentinhaber: Kautex Maschinenbau GmbH, 53229 Bonn (DE)
(72) Erfinder: KLEIN, Martin, 53757 Sankt Augustin (DE)
(74) Vertreter: Kohlmann, Kai
(86) Internationale Anmeldenummer: PCT/EP2013/075127
(87) Internationale Veröffentlichungsnummer: WO 2014/090607

(56) Entgegenhaltungen:
- EP-A1- 1 354 692
- EP-A2- 0 334 448
- DE-A1- 4 423 381
- DE-C1- 4 226 467
- US-A- 4 338 071
- US-A- 4 444 702

## Beschreibung

Die Erfindung betrifft ein Extrusionsblasformverfahren Extrusionsblasformverfahren umfassend die Schritte
- Plastifizieren eines thermoplastischen Kunststoffs zu einer Schmelze in einem Extruder,
- Fördern der Schmelze unter Druck von dem Extruder zu einem Kopf mit einer Austrittsöffnung,
- Umformen der Schmelze in dem Kopf zu einem Vorformling,
- Austreten des Vorformlings aus der Austrittöffnung des Kopfs mit einer Austrittsgeschwindigkeit,
- Erfassen der Austrittsgeschwindigkeit des aus der Austrittsöffnung austretenden Vorformlings sowie
- Vereinzeln des Vorformlings.

Außerdem betrifft die Erfindung eine Vorrichtung zur Durchführung eines Extrusionsblasformverfahrens.

Bei einem Extrusionsblasformverfahren wird in einem Extruder thermoplastischer Kunststoff zu einer Schmelze plastifiziert und unter Druck zu einem Kopf gefördert. Aus einer Austrittsöffnung des Kopfs tritt der Vorformling kontinuierlich mit einer Austrittsgeschwindigkeit aus. Die insbesondere unterhalb des Kopfs befindliche Blasform nimmt den am Kopf hängenden, als Schlauch ausgebildeten Vorformling auf, in der der Schlauch zum fertigen Hohlkörper aufgeweitet wird. Zum Vereinzeln des Vorformlings unterhalb der Austrittsöffnung des Kopfs jeweils nach dem Extrudieren einer gegebenen Länge des Vorformlings kommt beispielsweise eine Schneidvorrichtung zum Einsatz. Der vereinzelte Vorformling kann auch mit einer Handhabungseinheit an die Blasform übergeben werden.

Für die Herstellung einwandfreier Hohlkörper, beispielsweise einer Flasche oder eines Kanisters, ist es erforderlich, dass der aus dem Kopf austretende Vorformling eine Mindestlänge aufweist. Andererseits sollte eine bestimmte Länge des Vorformlings nicht überschritten werden, da sonst mehr Material als notwendig verbraucht wird. Die Einhaltung der richtigen Länge des Vorformlings ist darüber hinaus notwendig, da bei modernen Extrusionsblasformverfahren vielfach die Wanddicke des Vorformlings nach einem vorgegebenen Programm geregelt wird.

Beim Extrusionsblasformverfahren kommt es zu Viskositäts-, Förder-, Regenerat- und Material- sowie Schüttdichteschwankungen. Aufgrund dieser Schwankungen ist es unvermeidbar, dass je Blasformzyklus unterschiedlich lange Vorformlinge extrudiert werden. Überschreitet die Länge die Soll-Länge, ist der Abfallanteil zu groß. Unterschreitet die Länge die Soll-Länge wird möglicherweise Ausschuss produziert. Außerdem besteht die Gefahr, dass bei einer programmierten Regelung der Wanddicke des Vorformlings die Bereiche mit bestimmten Wanddicken nicht ihre richtige relative Lage zu der den extrudierten Vorformling aufnehmenden Blasform einnehmen.

Aus der DE 25 44 171 A ist es bekannt, unterhalb der Blasform eine Lichtschranke anzuordnen, die durch das untere Ende des extrudierten schlauchförmigen Vorformlings unterbrochen wird, sobald dieser eine Soll-Länge erreicht hat. Unterschreitet die bis zum Erreichen der Soll-Länge benötigte Zeit eine Soll-Zeit, in welcher bei absolut regelmäßigem Arbeiten des Extruders der schlauchförmige Vorformling seine Soll-Länge erreicht, arbeitet der Extruder zu schnell. In diesem Fall wird mit Hilfe einer Steuerung die Drehzahl der Schnecke des Extruders reduziert. Überschreitet die Zeit bis zum Erreichen der Soll-Länge die Soll-Zeit bedeutet dies, dass der Extruder zu langsam arbeitet. In diesem Fall wird mit Hilfe der Steuerung die Drehzahl der Schnecke des Extruders erhöht, sofern die Zeitüberschreitung außerhalb einer eingeplanten Toleranz liegt. Der Vorformling weist zum Zeitpunkt der Abtastung durch die Lichtschranke eine Länge auf, die der Soll-Länge entspricht. Ausschuss durch zu kurze Schlauchlängen wird hierdurch vermieden. Veränderungen der Extrusionsgeschwindigkeit durch Einstellen der Schneckendrehzahl wirken sich jedoch erst auf den nächsten Blasformzyklus aus. Schwankungen der Extrusionsgeschwindigkeit und damit der Zeitspanne zum Extrudieren eines schlauchförmigen Vorformlings lassen sich daher mit der bekannten Vorrichtung nicht vermeiden. Es werden daher zur Durchführung des Extrusionsblasformverfahrens recht lange Wartezeiten innerhalb eines Blasformzyklus benötigt.

Ferner ist es aus der DE 25 44 609 A bekannt, die Spaltbreite der Austrittsöffnung des Kopfs in Abhängigkeit von Längenänderungen des Vorformlings zu verstellen.

Aus der DE 10 2004 015 719 B4 ist ein gattungsgemäßes Verfahren zum Blasformen von Hohlkörpern bekannt. Das Verfahren umfasst eine Regelung hingewiesen, welche die Extrusionsgeschwindigkeit so korrigiert, dass der Vorformling in der Blasform eine vorgegebene Position einnimmt. Das Regelverfahren basiert auf einem Wanddicken-Programm, das auf die Spaltbreite des Düsenspaltes in kritischen Querschnittsbereichen einwirkt, wobei der Regelkreis das Ist-Gewicht eines aufgeteilten unteren Abfallbutzens und/oder des aufgeteilten Hohlkörpers mit einem entsprechenden Soll-Gewichts-Wert vergleicht. Das Einstellen der Lage des nachfolgenden Vorformlings erfolgt in Abhängigkeit von dem Soll-Ist-Gewichts-Wertvergleich durch Änderung der Spaltweite des Düsenspaltes und/oder der Schneckendrehzahl des Extruders.

Um ein Verkleben oder Verschweißen der Vorformlinge nach dem Abtrennen eines Vorformlings zu vermeiden, wird in der EP 1 354 692 A1 vorgeschlagen, den Austritt des Vorformlings aus der Düse des Düsenkopfes, während des Vereinzeins der Vorformlinge, kurzzeitig zu unterbrechen. Zur Unterbrechung des Förderns wird die Schmelze vorzugsweise von dem Extruder in einen Schmelzespeicher umgeleitet. Die während der kontinuierlichen Extrusion zwischengespeicherte Schmelze kann der dem Düsenkopf zugeführten Schmelze nach der Unterbrechung wieder zugemischt wird. Die Steuerung des Schmelzespeichers erfolgt durch den Strömungswiderstand, der durch den Weg zum Speicherraum des Schmelzespeichers bzw. den Düsenkopf bestimmt wird.

Die US 4 444 702 A offenbart ein Extrusionsblasformverfahren nach dem Oberbegriff des geltenden Anspruchs 1 . Unterhalb der Blasform der Vorrichtung ist in einem Abstand eine Fotozelle so angeordnet, dass die ihr zugeordnete Lichtschranke durch das untere Ende des Vorformlings am Ende des Blasformzyklus unterbrochen wird. Wenn durch die Fotozelle festgestellt worden ist, dass der Vorformling zu lang ist, wird die Spaltbreite der Austrittsöffnung in dem Kopf etwas vergrößert, mit dem Ergebnis, dass die Gesamtwanddicke des nachfolgenden Vorformlings etwas größer wird. Die Dickenzunahme der Wanddicke hat eine entsprechende Abnahme der Länge des Vorformlings zu Folge.

Ausgehend von diesem Stand der Technik liegt der Erfindung die Aufgabe zu Grunde, ein Extrusionsblasformverfahren der eingangs erwähnten Art zu schaffen, bei dem die Längenschwankungen der Vorformlinge möglichst gering sind. Darüber hinaus wird angestrebt, die benötigte Schmelzemenge je Blasformzyklus so gering wie möglich zu halten. Des Weiteren liegt der Erfindung die Aufgabe zu Grunde, eine Vorrichtung zur Durchführung des erfindungsgemäßen Extrusionsblasformverfahrens vorzuschlagen.

Die Lösung dieser Aufgabe basiert auf dem Gedanken, noch während des Blasformzyklus auf die Länge des in diesem Blasformzyklus hergestellten Vorformlings Einfluss zu nehmen.

Im Einzelnen wird die Aufgabe bei einem Extrusionsblasformverfahren der eingangs erwähnten Art dadurch gelöst, dass noch während eines Blasformzyklus auf die Länge des in diesem Blasformzyklus hergestellten Vorformlings Einfluss genommen wird, durch die weiteren Schritte:
- Steuern eines Schmelzespeichers (20) zur Aufnahme eines Teils der von dem Extruder (10) geförderten Schmelze oder zur Abgabe von zuvor aufgenommener Schmelze zusätzlich zu der geförderten Schmelze in Abhängigkeit von der erfassten Austrittsgeschwindigkeit während des Austretens und vor dem Vereinzeln des Vorformlings (18) in dem jeweiligen Blasformzyklus, wobei
   - der Schmelzespeicher (20) Schmelze abgibt, wenn die erfasste Austrittsgeschwindigkeit kleiner als ein Sollwert für die Austrittsgeschwindigkeit ist und
   - der Schmelzespeicher (20) Schmelze aufnimmt, wenn die erfasste Austrittsgeschwindigkeit größer als der Sollwert für die Austrittsgeschwindigkeit ist.

Eine Vorrichtung zur Herstellung von Hohlkörpern im Extrusionsblasformverfahren ergibt sich aus den Merkmalen des unabhängigen Anspruchs 8.

Ein Blasformzyklus zum Herstellen eines Formteils umfasst das Umformen der Schmelze in dem Kopf, das Austreten des Vorformlings aus der Austrittsöffnung des Kopfs sowie das Vereinzeln des Vorformlings nach dem Austreten. Während dieses Blasformzyklus wird die Austrittsgeschwindigkeit des aus der Austrittsöffnung austretenden Vorformlings erfasst. In Abhängigkeit von der erfassten Austrittsgeschwindigkeit wird noch während des Blasformzyklus der Schmelzespeicher gesteuert. Der Schmelzespeicher gibt während des Blasformzyklus zuvor aufgenommene Schmelze zusätzlich zu der von dem Extruder geförderten Schmelze ab, wenn die erfasste Austrittsgeschwindigkeit kleiner als ein Soll-Wert für die Austrittsgeschwindigkeit ist. Hierdurch wird die Austrittsgeschwindigkeit des Vorformlings, während des Blasformzyklus erhöht. Der Soll-Wert für die Austrittsgeschwindigkeit ist derjenige Wert, bei welchem der Vorformling seine exakte Soll-Länge in einem Blasformzyklus erreicht.

Der Schmelzespeicher nimmt indes einen Teil der vom Extruder geförderten Schmelze auf, wenn die erfasste Austrittsgeschwindigkeit des Vorformlings größer als der Soll-Wert für die Austrittsgeschwindigkeit ist. Hierdurch wird die Austrittsgeschwindigkeit des Vorformlings noch während des Blasformzyklus reduziert.

Durch das erfindungsgemäße Verfahren wird die Reproduzierbarkeit der extrudierten Länge des schlauchartigen Vorformlings, des Gewichts sowie der axialen Wanddickenverteilung des Vorformlings verbessert.

Das Vereinzeln des Vorformlings in einem Blasformzyklus erfolgt beispielsweise durch ein Durchtrennen des Vorformlings unterhalb der Austrittsöffnung des Kopfs. Eine andere Möglichkeit zum Vereinzeln des Vorformlings besteht darin, dass der Austritt des Vorformlings aus dem Kopf durch Steuern der Austrittsöffnung unterbrochen wird.

Um die dauerhafte Betriebsbereitschaft des Schmelzespeichers, insbesondere bei aufeinanderfolgenden Blasformzyklen mit zu hohen oder zu niedrigen Austrittsgeschwindigkeiten des Vorformlings sicherzustellen, kann die Fördermenge des Extruders insbesondere durch eine Drehzahländerung und /oder eine gravimetrische Durchsatzregelung des dem Extruder zugeführten Kunststoffgranulats erhöht oder abgesenkt werden. Die Fördermenge wird erhöht, um der Gefahr zu begegnen, dass sich der Schmelzespeicher bei anhaltend zu niedrigen Austrittsgeschwindigkeiten vollständig entleert. Die Fördermenge wird abgesenkt, um der Gefahr zu begegnen, dass der Schmelzespeicher bei anhaltend zu hohen Austrittsgeschwindigkeiten keine Schmelze mehr aufnehmen kann.

Um die Reproduzierbarkeit der extrudierten Länge des schlauchartigen Vorformlings weiter zu verbessern, ist es in einer Ausgestaltung der Erfindung vorgesehen, dass die Austrittsgeschwindigkeit mehrfach während des Austretens und vor dem Vereinzeln des schlauchförmigen Vorformlings erfasst wird. Alternativ besteht die Möglichkeit, die Austrittsgeschwindigkeit kontinuierlich während des Austretens und vor dem Vereinzeln des Vorformlings zu erfassen.

Sofern die Austrittsgeschwindigkeit nicht kontinuierlich erfasst wird, erfolgt die Geschwindigkeitsmessung vorzugsweise durch Zeitmessung einer Wegstrecke. Hierzu wird mindestens einmal, vorzugsweise jedoch mehrmals die Zeit für den Austritt einer Teillänge des Vorformlings vor dem Abtrennen gemessen. Die Teillänge ist ein prozentualer Anteil der Soll-Länge des Vorformlings. Gemessen wird beispielsweise die Zeit bis zum Austritt von 20 %, 40 %, 60 % und 80 % der Soll-Länge des Vorformlings. Hierzu werden an entsprechenden Positionen unterhalb des Kopfes Lichtschranken angeordnet, die durch das aus der Austrittsöffnung des Werkzeugkopfes austretende untere Ende des Vorformlings unterbrochen werden.

Sofern der Schmelzespeicher hydraulisch betätigt ist, kann dieser von der Steuerung mittels Wege- oder Proportional-Ventilen angesteuert werden. Ein elektromotorisch, beispielsweise über einen Linearmotor, betätigter Speicher wird insbesondere über ein elektronisch arbeitendes Schaltelement angesteuert.

In einer Variante des erfindungsgemäßen Verfahrens wird zusätzlich die Größe der Austrittsöffnung des Kopfs während des Austretens des Vorformlings verändert. Hierdurch kann die Wanddicke des Vorformlings nach einem vorgegebenen Programm geregelt werden. Dies geschieht insbesondere durch Änderung der Spaltbreite der Austrittsöffnung. Bei größerer Spaltbreite nimmt die Wanddicke zu, während sich durch eine kleinere Spaltbreite eine geringere Wanddicke ergibt. Auf diese Weise besteht die Möglichkeit, den Vorformling über seine Länge mit unterschiedlichen Wanddicken zu versehen, wobei die Lage der einzelnen Wanddickenbereiche des Vorformlings an Erfordernisse angepasst ist, die sich aus dem herzustellenden Hohlkörper ergeben. Selbstverständlich ist es im Rahmen der Erfindung jedoch auch möglich den Grundspalt der Austrittsöffnung einzustellen, um eine zusätzliche Regulierung des Vorformlings zu erreichen. Vorzugsweise wird die Regulierung durch Einstellen des Grundspaltes erst dann durchgeführt, wenn sich das Extrusionsblasformverfahren in Bezug auf die Wanddicke, das Artikelgewicht und die Zykluszeit im eingeschwungenen Zustand befindet.

Ein als separate Baugruppe ausgebildeter Schmelzespeicher und der Extruder sind vorzugsweise über eine Rohrleitung mit der Eintrittsöffnung des Kopfs verbunden.

Der Schmelzspeicher kann als LIFO-, vorzugsweise jedoch als FIFO-Speicher ausgeführt sein. Der Vorteil des FIFO Speichers besteht darin, dass die Verweildauer der Schmelze in dem Schmelzespeicher vergleichmässigt wird. Die bei LIFO-Speichern auftretende unterschiedlich lange thermische Belastung in dem Schmelzespeicher kann bei der Weiterverarbeitung der Kunststoffschmelze zu dem fertigen Hohlkörper zu Beeinträchtigungen von dessen mechanischen Eigenschaften und/oder dessen Aussehen führen. Der Aufbau eines für eine Vorrichtung zur Durchführung des Extrusionsblasformverfahrens geeigneten FIFO-Speichers ist dem hier zuständigen Fachmann an sich bekannt und ergibt sich beispielsweise aus der DE 42 26 467 C1. Der Aufbau eines für eine Vorrichtung zur Durchführung des Extrusionsblasformverfahrens geeigneten LIFO-Speichers ist dem hier zuständigen Fachmann an sich bekannt und ergibt sich beispielsweise aus der DE 102 17 311 A1.

In einer weiteren Ausführungsform der erfindungsgemäßen Vorrichtung zur Durchführung des Extrusionsblasformverfahrens kann der Schmelzespeicher als integraler Bestandteil des Extruders ausgebildet sein, wie dies beispielsweise bei Schubschnecken-Extrudern der Fall ist. Der Aufbau eines Schubschnecken-Extruders ist dem hier zuständigen Fachmann an sich bekannt und ergibt sich beispielsweise aus der DE 1 554 968 A.

Schließlich kann der Schmelzespeicher als integraler Bestandteil des Kopfs ausgebildet sein. Ein Kopf mit integriertem FIFO-Schmelzespeicher ist dem hier zuständigen Fachmann beispielsweise aus der DE 1 704 791 A bekannt. Der Kopf weist ein Gehäuse, eine Eintrittsöffnung für die Schmelze, einen Kern, einen Ringspalt für den Austritt der Schmelze sowie einen durch einen Ringkolben entleerbaren Speicherraum auf. Die Schmelze tritt diskontinuierlich durch den Ringspalt aus, und zwar unter der Einwirkung des Ringkolbens, der den Speicherraum entleert. Dabei stammt ein Teil der den Vorformling bildenden Schmelze auch direkt von dem mit der Eintrittsöffnung des Kopfs verbundenen Extruder, der während des Austretens des Vorformlings kontinuierlich arbeitet. In Folge dessen kann der in dem Kopf enthaltene Schmelzespeicher zusätzlich zu der von dem Extruder geförderten Schmelze in Abhängigkeit von der erfassten Austrittsgeschwindigkeit Schmelze abgeben bzw. einen Teil der von dem Extruder geförderten Schmelze in dem Speicherraum aufnehmen.

Um die Zeit für den Austritt einer Teillänge des Vorformlings zu erfassen, weist die Messvorrichtung mindestens einen schaltenden Sensor auf. Der schaltende Sensor ist, wie bereits eingangs erwähnt, insbesondere Bestandteil einer Lichtschranke. Alternativ kann der schaltende Sensor jedoch auch Bestandteil einer Ultraschallschranke oder Mikrowellenschranke sein.

Neben den berechnenden Verfahren zur Geschwindigkeitsmessung durch Zeitmessung einer Wegstrecke können zur Geschwindigkeitsmessung auch bestimmte phyikalische Effekte, wie der Doppler-Effekt genutzt werden. Wenn Schall, Mikrowellen oder Laserstrahlen von einem Objekt reflektiert werden, hat das Echo eine höhere Frequenz, wenn sich das Objekt auf den Betrachter zu bewegt. Dieser Frequenzunterschied aufgrund des Doppler-Effektes kann zur Geschwindigkeitsmessung des austretenden Vorformlings ausgewertet werden.

Zur Geschwindigkeitsmessung können beispielsweise auch Zeilenkameras zum Einsatz gelangen. Die einzige lichtempfindliche Zeile, der sogenannte Zeilensensor, wird vorzugsweise in Austrittsrichtung des Vorformlings ausgerichtet, um dessen Austrittsgeschwindigkeit zu erfassen.

Sofern das erfindungsgemäße Extrusionsblasformverfahren mit einer trendbasierten Spaltregelung kombiniert werden soll, kann die Austrittsöffnung des Kopfs mit Hilfe eines axial in dem Kopf verschieblichen Kerns eingestellt werden. Der Kern stellt an seinem unteren Ende die innere Begrenzung eines Ringspaltes dar, der nach außen von dem Gehäuse des Kopfs begrenzt wird.

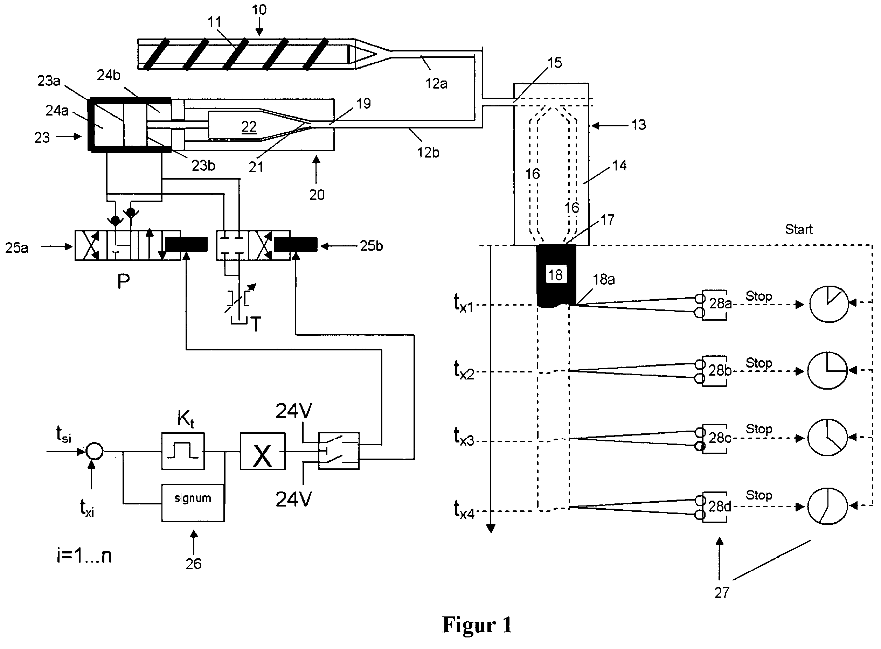

In der Zeichnung ist ein Ausführungsbeispiel der Erfindung dargestellt. Es zeigt
- **Figur 1**: ein Schema einer Vorrichtung zum Herstellen von Hohlkörpern aus thermoplastischem Kunststoff im Extrusionsblasformverfahren.

Die in Figur 1 schematisch dargestellte Vorrichtung weist einen Extruder (10) auf, dessen Schnecke (11) durch einen nicht dargestellten Motor angetrieben wird. Das Kunststoffgranulat wird dem Extruder (10) über einen nicht dargestellten Trichter zugeführt. Das zugeführte Kunststoffgranulat wird in dem Extruder (10) plastifiziert und über eine Rohrleitung (12a) zu dem Kopf (13) gefördert.

Das Gehäuse (14) des Kopfs (13) ist mit einer Eintrittsöffnung (15) für die vom Extruder (10) kommende Schmelze versehen, die, nachdem sie die Eintrittsöffnung (15) passiert hat, einen Kanal (16) durchströmt, der an der unteren Seite des Kopfs (13) in einer ringförmigen Austrittsöffnung (17) mündet, aus der die Schmelze als schlauchartiger Vorformling (18) kontinuierlich austritt.

An die Rohrleitung (12a) zwischen dem Extruder (10) und dem Kopf (13) ist über eine weitere Rohrleitung (12b) ein Schmelzespeicher (20) angeschlossen. Der Schmelzespeicher (20) umfasst einen in Richtung seiner Austrittsöffnung (19) konisch zulaufenden Speicherraum (21), in dem ein entsprechend geformter Schmelzekolben (22) hin- und herbeweglich geführt ist. Der Schmelzekolben (22) ist über eine Kolbenstange mit einem doppelt wirkenden Hydraulikzylinder (23) verbunden, dessen Kolben (23) mit gegenüberliegenden Kolbenflächen (23a, b) zwei aktive Bewegungsrichtungen des Schmelzekolbens (22) ermöglicht. Die Arbeitsräume (24a, b) des doppelt wirkenden Hydraulikzylinders (23) sind über Wege-Ventile (25a, b) mit einem Arbeitsmedium, in der Regel Hydraulikflüssigkeit, beaufschlagbar. Die Wege-Ventile (25a, b) sind elektrisch betätigt. Zu diesem Zweck sind die Steueranschlüsse der Wege-Ventile (25a, b) mit einer Steuerung (26) verbunden, deren Arbeitsweise weiter unten erläutert wird.

Unterhalb des Kopfes (13) ist eine in der Figur 1 nicht dargestellte Blasform angeordnet, die aus mindestens zwei Teilen besteht. Dieser Blasform ist eine ebenfalls in der Zeichnung der Übersichtlichkeit halber nicht dargestellte Einrichtung für die Zuführung eines Druckmittels zugeordnet, durch welche der Vorformling (18) in der geschlossenen Blasform zu dem gewünschten Formteil aufgeweitet wird.

Unterhalb des Kopfes (13) ist darüber hinaus eine Messvorrichtung (27) zum Erfassen der Austrittsgeschwindigkeit des aus der Austrittsöffnung (17) des Kopfs (13) austretenden Vorformlings (18) angeordnet. Im dargestellten Ausführungsbeispiel umfasst die Messvorrichtung insgesamt vier Lichtschranken (28 a-d), die in dem Ausführungsbeispiel als Reflexlichtschranken ausgeführt sind. Das von dem Sender der Reflexlichtschranke ausgehende Lichtsignal wird über das untere Ende (18a) des Vorformlings (A) selbst zurückgeworfen. Sender und Empfänger der Reflexlichtschranke befinden sich parallel zueinander in einem gemeinsamen Gehäuse. Die Lichtschranken (28a-d) sind in unterschiedlichen Abständen von der Austrittsöffnung (17) des Kopfs (13) ortsfest angeordnet.

Nachfolgend wird die Durchführung das Extrusionsblasformverfahrens näher erläutert:

In dem Extruder (10) wird der thermoplastische Kunststoff zu einer Schmelze plastifiziert und von dem Extruder (10) über die Rohrleitung (12a) zu dem Kopf (13) gefördert. Des Weiteren gelangt Schmelze über die Rohrleitung (12b) zu dem Schmelzespeicher (20) und füllt dessen Speicherraum (21), der einen Teil der von dem Extruder (10) plastifizierten und geförderten Schmelze aufnimmt.

In dem Kopf (13) wird die Schmelze in dem Kanal (16) zu dem schlauchförmigen Vorformling (18) umgeformt. Der Vorformling (18) tritt aus der Austrittsöffnung (17) des Kopfs (13) aus, wobei der Vorformling (18) in die nicht dargestellte Blasform eintritt.

Während der Vorformling (18) bis zu seiner Soll-Länge extrudiert wird, wird mit Hilfe der Messvorrichtung (27) an den durch die Positionen der Lichtschranken (28a-d) vorgegebenen Messpunkten die Zeit für den Austritt unterschiedlicher Teillängen des Vorformlings (18) gemessen. Die Teillänge ist dabei jeweils die Länge des Vorformlings (18) von der Austrittsöffnung (17) bis zu dessen unterem Ende (18a) zum Zeitpunkt der Unterbrechung einer der Lichtschranken (28a-d). Das Ergebnis der Zeitmessung, die Zeiten tₓ₁ bis tₓ₄ werden in der Steuerung (26) mit zuvor ermittelten Soll-Zeiten tₛ₁ bis tₛ₄ verglichen, die bei einem absolut gleichmäßigen Betrieb des Extruders (10) zum Erreichen der durch die Position der Lichtschranken (28a-d) vorgegebenen Messpunkte benötigt werden. Ist die gemessene Zeit tₓᵢ kleiner als die Soll-Zeit tₛᵢ bedeutet dies, dass die Austrittsgeschwindigkeit zu hoch ist. Ist die gemessene Zeit tₓᵢ größer als die Soll-Zeit tₛᵢ bedeutet dies, dass die Austrittsgeschwindigkeit zu niedrig ist.

Ist die erfasste Austrittsgeschwindigkeit zu niedrig, gibt der Schmelzespeicher (20) zuvor aufgenommene Schmelze zusätzlich zu der von dem Extruder (10) geförderten Schmelze ab. Hierdurch wird die Austrittsgeschwindigkeit des Vorformlings (18) noch während des Blasformzyklus erhöht. Ist die erfasste Austrittsgeschwindigkeit zu hoch, nimmt der Schmelzespeicher (20) einen Teil der von dem Extruder (10) plastifizierten und geförderten Schmelze in seinem Speicherraum (21) auf. Hierdurch wird die Austrittsgeschwindigkeit des Vorformlings (18) noch währende des Blasformzyklus reduziert.

Die Soll-Wert-Abweichung wird in der Steuerung (26) in einen Impuls variabler Dauer (Kₜ) und mit variablem Vorzeichen (signum) umgewandelt und an die Wegeventile (25a,b) ausgegeben. Um aus dem Schmelzespeicher (20) Schmelze zusätzlich zu der von dem Extruder (10)geförderten Schmelze abzugeben, bringt der Impuls das Vier-Drei-Wege-Ventil (25a) und das Vier-Zwei-Wege-Ventil (25b) jeweils in die rechte Schaltstellung, wodurch die Kolbenfläche (23a) mit der Druckquelle (P) beaufschlagt und der Arbeitsraum (24b) mit dem Tank (T) verbunden wird. Der Schmelzekolben (22) wird hierdurch nach rechts in die in Figur 1 dargestellte Position bewegt. Zum Aufnehmen eines Teils der von dem Extruder (10) geförderten Schmelze bringt der Impuls das Vier-Drei-Wege-Ventil (25a) in die linke Schaltstellung und das Vier-Zwei-Wege-Ventil (25b) in die rechte Schaltstellung. Nunmehr ist die Kolbenfläche (23b) von der Druckquelle (P) beaufschlagt, während der Arbeitsraum (24a) mit dem Tank (T) über das Vier-Zwei-Wegeventil (25b) verbunden ist. Der Schmelzekolben (22) bewegt sich nach links und Schmelze wird in den Speicherraum (21) aufgenommen.

In dem während eines Blasformzyklus zur Bildung des schlauchförmigen Vorformlings (18) die Austrittsgeschwindigkeit des aus dem Kopf (13) austretenden Vorformlings (18) erfasst und in Abhängigkeit von der erfassten Austrittsgeschwindigkeit der Schmelzespeicher (20) noch während des Blasformzyklus einen Teil der von dem Extruder (10) geförderten Schmelze aufnimmt oder zusätzlich zu der von dem Extruder (10) geförderten Schmelze abgibt, wird die Reproduzierbarkeit der Länge, des Gewichts und der Wanddickenverteilung der schlauchförmigen Vorformlinge (18) erfindungsgemäß erhöht.

**Bezugszeichenliste**

| **Nr.** | **Bezeichnung** |
|---|---|
| 10 | Extruder |
| 11 | Schnecke |
| 12 a, b | Rohrleitung |
| 13 | Kopf |
| 14 | Gehäuse |
| 15 | Eintrittsöffnung |
| 16 | Kanal |
| 17 | Austrittsöffnung |
| 18 | Vorformling |
| 18a | unteres Ende des Vorformlings |
| 19 | Austrittsöffnung |
| 20 | Schmelzspeicher |
| 21 | Speicherraum |
| 22 | Schmelzekolben |
| 23 | Hydraulikzylinder |
| 23a,b | Kolbenflächen |
| 24a,b | Arbeitsräume |
| 25a,b | Wegeventile |
| 26 | Steuerung |
| 27 | Messvorrichtung |
| 28a-d | Lichtschranken |

## Patentansprüche

1. Extrusionsblasformverfahren umfassend die Schritte
- Plastifizieren eines thermoplastischen Kunststoffs zu einer Schmelze in einem Extruder (10),
- Fördern der Schmelze unter Druck von dem Extruder (10) zu einem Kopf (13) mit einer Austrittsöffnung (17),
- Umformen der Schmelze in dem Kopf (13) zu einem Vorformling (18),
- Austreten des Vorformlings (18) aus der Austrittöffnung (17) des Kopfs (13) mit einer Austrittsgeschwindigkeit,
- Erfassen der Austrittsgeschwindigkeit des aus der Austrittsöffnung (17) austretenden Vorformlings (18),- Vereinzeln des Vorformlings (18),
**dadurch gekennzeichnet, dass**
- noch während eines Blasformzyklus auf die Länge des in diesem Blasformzyklus hergestellten Vorformlings (18) Einfluss genommen wird, durch die weiteren Schritte:
- Steuern eines Schmelzespeichers (20) zur Aufnahme eines Teils der von dem Extruder (10) geförderten Schmelze oder zur Abgabe von zuvor aufgenommener Schmelze zusätzlich zu der geförderten Schmelze in Abhängigkeit von der erfassten Austrittsgeschwindigkeit während des Austretens und vor dem Vereinzeln des Vorformlings (18) in dem jeweiligen Blasformzyklus, wobei
- der Schmelzespeicher (20) Schmelze abgibt, wenn die erfasste Austrittsgeschwindigkeit kleiner als ein Sollwert für die Austrittsgeschwindigkeit ist und
- der Schmelzespeicher (20) Schmelze aufnimmt, wenn die erfasste Austrittsgeschwindigkeit größer als der Sollwert für die Austrittsgeschwindigkeit ist.

2. Extrusionsblasformverfahren nach Anspruch 1, **dadurch gekennzeichnet, dass** die Austrittsgeschwindigkeit mehrfach während des Austretens und vor dem Vereinzeln des Vorformlings (18) erfasst wird.

3. Extrusionsblasformverfahren nach Anspruch 1, **dadurch gekennzeichnet, dass** die Austrittsgeschwindigkeit kontinuierlich während des Austretens und vor dem Vereinzeln des Vorformlings (18) erfasst wird.

4. Extrusionsblasformverfahren nach Anspruch 1 oder 2, **dadurch gekennzeichnet, dass** zum Erfassen der Austrittsgeschwindigkeit die Zeit (tₓᵢ) für den Austritt einer Teillänge des Vorformlings (18) gemessen wird.

5. Extrusionsblasformverfahren nach Anspruch 4, **dadurch gekennzeichnet, dass** zur Messung der Zeit (tₓᵢ) für den Austritt einer Teillänge des Vorformlings (18) eine Lichtschranke (28a-d) durch das untere Ende (18a) des austretenden Vorformlings (18) unterbrochen wird.

6. Extrusionsblasformverfahren nach einem der Ansprüche 1 bis 5, **dadurch gekennzeichnet, dass** der Schmelzespeicher (20) hydraulisch oder elektromotorisch betätigt wird.

7. Extrusionsblasformverfahren nach einem der Ansprüche 1 bis 6, **dadurch gekennzeichnet, dass** die Größe der Austrittsöffnung (17) des Kopfs (13) während des Austretens des Vorformlings (18) aus der Austrittöffnung (17) verändert wird.

8. Vorrichtung zur Herstellung von Hohlkörpern mittels Blasformen, die
- einen Extruder (10) zum Plastifizieren eines thermoplastischen Kunststoffs zu einer Schmelze und zum Fördern der Schmelze,
- einen Kopf (13) zum Umformen der Schmelze zu einem Vorformling (18) mit einer Eintrittsöffnung (15) für die Schmelze und einer Austrittsöffnung (17) durch die der Vorformling (18) austritt und
- mindestens eine Blasform
aufweist,
**dadurch gekennzeichnet, dass**
- die Vorrichtung einen Schmelzespeicher (20) zur Aufnahme eines Teils der von dem Extruder (10) geförderten Schmelze oder zur Abgabe von zuvor aufgenommener Schmelze zusätzlich zu der von dem Extruder (10) geförderten Schmelze sowie mindestens eine Messvorrichtung (27) zum Erfassen der Austrittsgeschwindigkeit des aus der Austrittsöffnung (17) austretenden Vorformlings (18) aufweist und
- eine Steuerung (26) des Schmelzespeichers (20) derart eingerichtet ist, dass noch während eines Blasformzyklus auf die Länge des in diesem Blasformzyklus hergestellten Vorformlings (18) Einfluss genommen wird, indem der Schmelzespeicher (20) Schmelze abgibt, wenn die während des Blasformzyklus erfasste Austrittsgeschwindigkeit kleiner als ein Sollwert für die Austrittsgeschwindigkeit ist und der Schmelzespeicher Schmelze aufnimmt, wenn die während des Blasformzyklus erfasste Austrittsgeschwindigkeit größer als der Sollwert für die Austrittsgeschwindigkeit ist.

9. Vorrichtung nach Anspruch 8, **dadurch gekennzeichnet, dass** der Schmelzespeicher (20) und der Extruder (10) über eine Rohrleitung (12 a,b) mit der Eintrittsöffnung (15) des Kopfs (13) verbunden sind.

10. Vorrichtung nach Anspruch 9, **dadurch gekennzeichnet, dass** der Schmelzespeicher (20) als integraler Bestandteil des Extruders ausgebildet ist.

11. Vorrichtung nach Anspruch 8 oder 9, **dadurch gekennzeichnet, dass** der Schmelzespeicher (20) als separate Baugruppe ausgebildet ist.

12. Vorrichtung nach Anspruch 8, **dadurch gekennzeichnet, dass** der Schmelzespeicher (20) als integraler Bestandteil des Kopfs (13) ausgebildet ist.

13. Vorrichtung nach einem der Ansprüche 8 bis 12, **dadurch gekennzeichnet, dass** die Messvorrichtung (27) mindestens einen schaltenden Sensor aufweist, um die Zeit (tₓᵢ) für den Austritt einer Teillänge des Vorformlings (18) zu erfassen.

14. Vorrichtung nach einem der Ansprüche 8 bis 13, **dadurch gekennzeichnet, dass** die Austrittsöffnung (17) des Kopfs (13) größeneinstellbar ist.

## Claims

1. An extrusion blow-moulding method, comprising the steps:
- plasticizing a thermoplastic material to obtain a melt in an extruder (10),
- conveying the melt under pressure from the extruder (10) to a head (13) with an outlet opening (17);
- forming the melt in the head (13) into a preform (18),
- emergence of the preform (18) from the outlet opening (17) of the head (13) at an exit speed,
- detecting the exit speed of the preform (18) emerging from the outlet opening (17),
- separating the preform (18),
**characterized in that**
- the length of the preform (18) produced during a blow moulding cycle is influenced by the further steps:
- controlling a melt accumulator (20) to receive a portion of the melt conveyed by the extruder (10) or to discharge previously received melt in addition to the conveyed melt as a function of the detected exit speed during the exit and before the separation of the preform (18) in the respective blow moulding cycle, wherein
- the melt accumulator (20) discharges melt when the detected exit speed is less than a desired value for the exit speed, and
- the melt accumulator (20) receives melt when the detected exit speed is greater than the desired value for the exit speed.

2. The extrusion blow-moulding method according to claim 1, **characterized in that** the exit speed is detected multiple times during the emergence and prior to the separation of the preform (18).

3. The extrusion blow-moulding method according to claim 1, **characterized in that** the exit speed is detected continuously during the emergence and prior to the separation of the preform (18).

4. The extrusion blow-moulding method according to claim 1 or 2, **characterized in that** the time (tₓᵢ) for exit of a partial length of the preform (18) is measured to detect the exit speed.

5. The extrusion blow-moulding method according to claim 4, **characterized in that** a light barrier (28a-d) is interrupted by the lower end (18a) of the emerging preform (18) to measure the time (tₓᵢ) for exit of a partial length of the preform (18).

6. The extrusion blow-moulding method according to any one of claims 1 to 5, **characterized in that** the melt accumulator (20) is actuated hydraulically or by an electric motor.

7. The extrusion blow-moulding method according to any one of claims 1 to 6, **characterized in that** the size of the outlet opening (17) of the head (13) is varied during emergence of the preform (18) from the outlet opening (17).

8. A device for the production of hollow bodies by means of blow-moulding, comprising:
- an extruder (10) for plasticizing a thermoplastic material to obtain a melt and for conveying the melt,
- a head (13) for forming the melt into a preform (18) with an inlet opening (15) for the melt and an outlet opening (17), through which the preform (18) emerges and
- at least one blow mould,
**characterized in that**
- the device comprises a melt accumulator (20) for receiving a portion of the melt conveyed by said extruder (10) or for discharging previously received melt in addition to the melt conveyed by said extruder (10), as well as at least one measuring device (27) for detecting the exit speed of the preform (18) emerging from the outlet opening (17) and
- a controller (26) of said melt accumulator (20) is adapted to influence the length of the preform (18) produced in this blow moulding cycle during a blow moulding cycle whereby the melt accumulator (20) discharges melt when the exit speed detected during a blow moulding cycle is less than a desired value for the exit speed, and said melt accumulator receives melt when the exit speed detected during a blow moulding cycle is greater than the desired value for the exit speed.

9. The device according to claim 8, **characterized in that** the melt accumulator (20) and the extruder (10) are connected via a pipeline (12a, b) to the inlet opening (15) of the head (13).

10. The device according to claim 9, **characterized in that** the melt accumulator (20) is configured as an integral component of said extruder.

11. The device according to claim 8 or 9, **characterized in that** the melt accumulator (20) is configured as a separate assembly.

12. The device according to claim 8, **characterized in that** the melt accumulator (20) is configured as an integral component of said head (13).

13. The device according to any one of claims 8 to 12, **characterized in that** the measuring device (27) comprises at least one switching sensor to detect the time (tₓᵢ) for emergence of a partial length of the preform (18).

14. The device according to any one of claims 8 to 13, **characterized in that** the outlet opening (17) of the head (13) is adjustable in size.

## Revendications

1. Procédé de formage par extrusion-soufflage, comprenant les étapes :
- plastification d'une matière thermoplastique en une masse fondue dans une extrudeuse (10),
- convoyage sous pression de la masse fondue de l'extrudeuse (10) vers une tête (13) dotée d'un orifice de sortie (17),
- déformation de la masse fondue dans la tête (13) en une ébauche (18),
- sortie de l'ébauche (18) de l'orifice de sortie (17) de la tête (13), à une vitesse de sortie,
- détection de la vitesse de sortie de l'ébauche (18) sortant de l'orifice de sortie (17),
- désolidarisation de l'ébauche (18),
**caractérisé en ce que**
- encore pendant le cycle de soufflage, il est pris influence sur la longueur de l'ébauche (18) fabriquée lors de ce cycle de soufflage par les étapes suivantes :
- commande d'un accumulateur (20) de masse fondue destiné à recevoir une partie de la masse fondue convoyée à partir de l'extrudeuse (10) ou à distribuer de la masse fondue réceptionnée précédemment en sus de la masse fondue convoyée, en fonction de la vitesse de sortie détectée pendant la sortie et la désolidarisation de l'ébauche (18) dans le cycle de soufflage concerné,
- l'accumulateur (20) de masse fondue distribuant de la masse fondue si la vitesse de sortie détectée est inférieure à une valeur de consigne pour la vitesse de sortie et
- l'accumulateur (20) de masse fondue réceptionnant de la masse fondue si la vitesse de sortie détectée est supérieure à la valeur de consigne pour la vitesse de sortie.

2. Procédé de formage par extrusion-soufflage selon la revendication 1, **caractérisé en ce que** la vitesse de sortie est détectée plusieurs fois pendant la sortie et avant la désolidarisation de l'ébauche (18).

3. Procédé de formage par extrusion-soufflage selon la revendication 1, **caractérisé en ce que** la vitesse de sortie est détectée en continu pendant la sortie et avant la désolidarisation de l'ébauche (18).

4. Procédé de formage par extrusion-soufflage selon la revendication 1 ou la revendication 2, **caractérisé en ce que** pour la détection de la vitesse de sortie, on mesure le temps (tₓᵢ) pour la sortie d'une longueur partielle de l'ébauche (18).

5. Procédé de formage par extrusion-soufflage selon la revendication 4, **caractérisé en ce que** pour la mesure du temps (tₓᵢ) pour la sortie d'une longueur partielle de l'ébauche (18), une barrière lumineuse (28a à d) est interrompue par l'extrémité inférieure (18a) de l'ébauche (18) sortante.

6. Procédé de formage par extrusion-soufflage selon l'une quelconque des revendications 1 à 5, **caractérisé en ce que** l'accumulateur (20) de masse fondue est actionné par moyen hydraulique ou par moteur électrique.

7. Procédé de formage par extrusion-soufflage selon l'une quelconque des revendications 1 à 6, **caractérisé en ce que** la taille de l'orifice de sortie (17) de la tête (13) est modifiée pendant la sortie de l'ébauche (18) de l'orifice de sortie (17).

8. Dispositif destiné à fabriquer des corps creux par extrusion-soufflage qui comporte
- une extrudeuse (10) destinée à plastifier une matière thermoplastique en une masse fondue et à convoyer la masse fondue,
- une tête (13) destinée à déformer la masse fondue en une ébauche (18), avec un orifice d'entrée (15) pour la masse fondue et un orifice de sortie (17), à travers lequel l'ébauche (18) sort et
- au moins un moule de soufflage
**caractérisé en ce que**
- le dispositif comporte un accumulateur (20) de masse fondue destiné à réceptionner une partie de la masse fondue convoyée à partir de l'extrudeuse (10) ou à distribuer de la masse fondue réceptionnée auparavant, en sus de la masse fondue convoyée par l'extrudeuse (10), ainsi qu'au moins un dispositif de mesure (27), destiné à détecter la vitesse de sortie de l'ébauche (18) sortant de l'orifice de sortie (17) et
- un système de commande (26) de l'accumulateur (20) de masse fondue est installé de telle sorte qu'encore pendant un cycle de soufflage, il soit pris influence sur la longueur de l'ébauche (18) fabriquée lors dudit cycle de formage **en ce que** l'accumulateur (20) de masse fondue distribue de la masse fondue si la vitesse de sortie détectée pendant le cycle de soufflage est inférieure à une valeur de consigne pour la vitesse de sortie et l'accumulateur de masse fondue réceptionne de la masse fondue si la vitesse de sortie détectée pendant le cycle de soufflage est supérieure à la valeur de consigne pour la vitesse de sortie.

9. Dispositif selon la revendication 8, **caractérisé en ce que** l'accumulateur (20) de masse fondue et l'extrudeuse (10) sont reliés avec l'orifice de sortie (15) de la tête (13) par l'intermédiaire d'un conduit tubulaire (12a, b).

10. Dispositif selon la revendication 9, **caractérisé en ce que** l'accumulateur (20) de masse fondue est conçu en tant que partie intégrante de l'extrudeuse.

11. Dispositif selon la revendication 8 ou la revendication 9, **caractérisé en ce que** l'accumulateur (20) de masse fondue est conçu en tant qu'ensemble séparé.

12. Dispositif selon la revendication 8, **caractérisé en ce que** l'accumulateur (20) de masse fondue est conçu en tant que partie intégrante de la tête (13).

13. Dispositif selon l'une quelconque des revendications 8 à 12, **caractérisé en ce que** le dispositif de mesure (27) comporte au moins un capteur qui commute pour détecter le temps (ₜₓᵢ) pour la sortie d'une longueur partielle de l'ébauche (18).

14. Dispositif selon l'une quelconque des revendications 8 à 13, **caractérisé en ce que** l'orifice de sortie (17) de la tête (13) est réglable en taille.
